# EUROPEAN PATENT APPLICATION

(11) **EP 3 492 243 A1**
(43) Date of publication of application: **05.06.2019**
(21) Application number: 17204528.8
(22) Date of filing: 29.11.2017
(51) Int. Cl.: B29C 64/35, B33Y 40/00, B33Y 30/00, B29C 64/20, B22F 3/105

(54) **APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Hofmann, Alexander, 96260 Weismain (DE)
(74) Representative: Hafner & Kohl

(57) **Abstract**

Apparatus (1) for additively manufacturing of three-dimensional objects (2) by means of successive layerwise selective irradiation and consolidation of layers of build material (3) which can be consolidated by means of an energy beam (4), the apparatus (1) comprising:
- at least one chamber (8) in which build material depositions (3') are built during operation of the apparatus (1),
- at least one carrying device (12), the carrying device (12) comprising at least one carrying element (12b) being moveably supported in at least one degree of freedom of motion within the at least one chamber (8),
- a cleaning device (14) assignable or assigned to the at least one chamber (8), the cleaning device (14) being adapted to remove respective undesired build material depositions (3') from the at least one chamber (8), the cleaning device (14) comprising at least one cleaning element (14a) being connectable or connected with the carrying element (12b).

## Description

The invention relates to an apparatus for additively manufacturing of three-dimensional objects by means of successive layerwise selective irradiation and consolidation of layers of build material which can be consolidated by means of an energy beam.

Respective apparatuses for additively manufacturing three-dimensional objects, e.g. technical components, are widely known and may be embodied as selective laser sintering apparatuses, selective laser melting apparatuses or selective electron beam melting apparatuses, for instance.

It is known that an undesired deposition of non-consolidated build material at portions of a chamber, e.g. the process chamber, of a respective apparatus may occur during operation of the apparatus. Respective build material depositions are typically built at and adhere to the walls of a respective chamber of the apparatus, i.e. typically the process chamber of the apparatus in which the additive build-up of three-dimensional takes place.

Respective build material depositions need to be removed after completing a build-job. Thus, the process chamber needs to be cleaned after completing a build-job. This particularly applies when different build materials are used in different build jobs.

Hitherto, cleaning of the process chamber is a manual cumbersome process which may require safety measures assuring that cleaning personnel has no (direct) contact with the build material.

It is the object of the invention to provide an apparatus for additively manufacturing three-dimensional objects which allows for an improved principle of cleaning of a respective chamber of the apparatus in which non-consolidated build material is deposited during operation of the apparatus.

This object is achieved by an apparatus for additively manufacturing three-dimensional objects according to Claim 1. The claims depending on Claim 1 relate to possible embodiments of the apparatus according to Claim 1.

The apparatus described herein is an apparatus for additively manufacturing three-dimensional objects, e.g. technical components, by means of successive layerwise selective irradiation and consolidation of layers of a build material ("build material") which can be consolidated by means of an energy beam. A respective build material may be a powdered build material; a powdered build material may comprise at least one of a metal powder, a ceramic powder, or a polymer powder, for instance. A respective energy beam can be a laser beam or an electronic beam, for instance. A respective apparatus can be a selective laser sintering apparatus, a selective laser melting apparatus, or a selective electron beam melting apparatus, for instance.

The apparatus comprises at least one chamber in which undesired build material depositions are built during operation of the apparatus. A respective chamber may comprise a number of walls defining an inner chamber volume. An example of a respective chamber is a/the process chamber of the apparatus, i.e. the chamber in which the additive build-up of three-dimensional takes place. Put simply, the apparatus comprises at least one chamber which needs to be cleaned after a build job is completed.

The apparatus comprises a number of functional devices which are operable during its operation. Each functional device may comprise a number of functional units. Exemplary functional devices are a build material application device, e.g. a coating device, configured to successively apply layers of build material which are to be selectively irradiated and consolidated in a build plane of a process chamber of the apparatus, the build material application device comprising at least one build material application unit, e.g. a coating unit; an irradiation device configured to selectively irradiate and consolidate respective layers of build material with at least one energy beam, the irradiation device comprising at least one irradiation unit, e.g. a beam generating unit; a carrying device the carrying device being adapted to carry at least one functional device or at least one functional unit of a respective functional device, the carrying device comprising at least one carrying unit.

The carrying unit comprises at least one carrying element. The carrying element comprises a base body. The base body may have a longitudinal geometric design and may therefore, be deemed as a carrying arm. The base body may be provided with a number of carrying interfaces adapted to interchangeably carry an item, in particular a functional device or functional unit of the apparatus. In other words, the carrying interfaces allow for a detachable, e.g. mechanical, e.g. bolted, connection of the carrying element with an item, in particular at least one functional device or functional unit of the apparatus. As an example, the carrying element may carry a coating device or coating unit of the apparatus.

The carrying element is moveably supported in at least one degree of freedom of motion within the at least one chamber of the apparatus. A respective freedom of motion may comprise translational motion of the carrying element along at least one translational axis, e.g. a x- and/or y- and/or z-axis of the apparatus, and/or rotational motions of the carrying element along at least one rotational axis. It is also possible that the carrying element is moveably supported not only within one chamber, but also within a plurality of chambers; the carrying element may thus, be moveably supported between a plurality of chambers. In either case, the carrying element may be at least moveably supported between at least one first position and at least one second position so that the carrying element may be at least moved between at least one first position and at least one second position along at least one pre-definable or pre-defined track of motion. A track of motion may include motions in different spatial axes and different spatial orientations, respectively. A drive unit, e.g. a motor, being adapted to generate a drive force setting the carrying element in a respective motion may be associated with the carrying element or the carrying unit, respectively. The implementation of tracks of motion of the carrying element may be controlled by a hard- and/or software embodied control unit associated with the carrying element or the carrying unit, respectively.

The apparatus further comprises a cleaning device assignable or assigned to the at least one chamber in which undesired build material depositions are built during operation of the apparatus. The cleaning device is adapted to remove respective undesired build material depositions from a respective chamber. The cleaning device comprises at least one cleaning element being connectable or connected with the carrying element. Hence, when connected with the carrying element, the cleaning element may be moved in at least one degree of freedom of motion within the at least one chamber. The track of motion along which the carrying element is moved in order to remove undesired build material depositions from a respective chamber may include all portions of the chamber in which respective undesired build material depositions are built during operation of the apparatus. As an example, the cleaning device may be moved along wall portions, e.g. bottom wall portions and/or side wall portions and/or top wall portions, of the chamber at which build material depositions may be built and/or are built during operation of the apparatus.

The track of motion along which the carrying element is moved in order to remove undesired build material depositions from a respective chamber may differ from the track of motion along which the carrying element is moved in order to e.g. apply layers of build material. Hence, the carrying element may be moved in different tracks of motion in different operational modes, whereby one operational mode is a cleaning mode in which undesired build material depositions are removed from a respective chamber. The implementation of different tracks of motion and operational modes, respectively of the carrying element may be controlled by the aforementioned control unit.

Since all motions of the carrying element and the cleaning element connected therewith may be implemented in semi- or fully automatic manner, an efficient cleaning of a respective chamber of the apparatus is feasible.

The cleaning device may comprise a stream generating unit. The stream generating unit may be adapted to generate at least one cleaning stream at least partly streaming through the chamber, particularly along portions of the chamber, e.g. surfaces of chamber wall portions, at which build material is deposited during operation of the apparatus. While streaming through the respective chamber, the cleaning stream may remove build material depositions from respective portions of the chamber at which build material is deposited. The cleaning stream may be a fluid stream, particularly a gas stream. By properly adjusting the streaming properties, e.g. streaming direction, streaming velocity, streaming profile, i.e. adjusting turbulent or laminar streaming profiles, etc., even persistent depositions of build material may be removed. Hence, a pneumatic removal of build material depositions from a respective chamber of the apparatus is possible.

The stream generating unit may be adapted to generate at least one blowing stream adapted to blow deposited build material from respective portions of the chamber at which build material is deposited during operation of the apparatus. Thus, the removal of respective build material depositions may be implemented by a blowing stream. In this case, the stream generating unit may be built as or may comprise a pumping unit adapted to generate a respective blowing stream.

In the case in which the stream generating unit is adapted to generate at least one blowing stream adapted to blow deposited build material from respective portions of the chamber at which build material is deposited during operation of the apparatus, the blowing stream may be directed/urged towards an inlet of a build material reception chamber, particularly a build material reception chamber or an overflow module, adapted to receive build material which was not consolidated during operation of the apparatus. Hence, by using a respective blowing stream build material may not only be removed from the location at which it was deposited, but (removed build material) may also be directed/urged towards an inlet of a build material reception chamber in which also non-consolidated build material which was not deposited is received.

The stream generating unit may additionally or alternatively be adapted to generate at least one sucking stream adapted to suck deposited build material from respective portions of the chamber at which build material is deposited during operation of the apparatus and/or to suck swirled build material from the chamber. Thus, the removal of respective build material depositions may additionally or alternatively be implemented by a sucking stream. In this case, the stream generating unit may be built as or may comprise a pumping unit adapted to generate a respective sucking stream.

The cleaning element may be provided with a streaming channel structure comprising at least one streaming channel extending between at least one streaming channel inlet of the cleaning element and at least one streaming channel outlet of the cleaning element. A streaming channel inlet may comprise a suitable streaming inlet interface allowing the cleaning stream to enter the streaming channel structure in desired manner. A respective streaming channel inlet may particularly allow for a pneumatic connection between the stream generating unit and the streaming channel and thus, for connecting the stream generating unit with the streaming channel so that the cleaning stream may be introduced into the streaming channel. A suitable streaming interface may be built as or comprise a pneumatic connector element. A streaming channel outlet may comprise a suitable streaming outlet interface allowing the cleaning stream to exit the streaming channel in desired manner. A respective streaming channel outlet may be built as or comprise at least one, particularly bore- or slit-like, opening. The geometric design of a respective opening may be chosen so as to influence the streaming properties of the cleaning stream exiting the streaming channel structure; as such, a respective opening may be built as or may comprise a nozzle. Of course, the streaming channel outlet may comprise a plurality of openings in a specific spatial arrangement.

The streaming channel structure may comprise at least two streaming channels. In the case of at least two streaming channels, (the) at least two streaming channels may communicate with each other, i.e. may be interconnected, or may not communicate with each other, i.e. may not be interconnected.

In the case of not communicating streaming channels, i.e. separate streaming channels, the streaming channel structure may comprise at least one first streaming channel for a first cleaning stream, e.g. a blowing stream adapted to blow deposited build material from respective portions of the chamber at which build material is deposited during operation of the apparatus, and at least one second streaming channel for a second cleaning stream, e.g. a sucking stream adapted to suck deposited build material from respective portions of the chamber at which build material is deposited during operation of the apparatus and/or to suck swirled build material from the chamber. Respective first and second cleaning streams may be generated by separate stream generating units, i.e. a first stream generating may be provided to generate a respective first cleaning stream, and a second stream generating unit may be provided to generate a respective second cleaning stream.

The apparatus may comprise at least one build material separating unit adapted to separate build material from a cleaning stream, e.g. from a blowing stream or a sucking stream. The build material separating unit may communicate with a streaming channel structure of the apparatus, e.g. may be disposed within a respective streaming channel structure of the apparatus, so that respective cleaning streams, e.g. blowing streams or sucking streams, respectively may stream through the build material separating unit, whereby build material is separated from the respective stream. Build material which was separated from a respective stream may at least partly be, if need be after being processed, e.g. sieved, re-used in an additive manufacturing process. A respective build material separating unit may be built as a filter unit and/or a cyclone unit or may comprise at least one filter unit and/or at least one cyclone unit.

Alternatively or additionally to a respective pneumatic removal of build material depositions from a respective chamber of the apparatus, a mechanical removal of build material depositions from a respective chamber of the apparatus is possible. Thus, the cleaning device may comprise a mechanical build material removing unit adapted to mechanically remove deposited build material from portions of the chamber, e.g. surfaces of chamber wall portions, at which build material is deposited during operation of the apparatus. The mechanical build material removing unit may be built as a brush- or broom-unit or may comprise at least one brush- and/or broom unit.

Alternatively or additionally to a respective pneumatic or mechanical removal of build material depositions from a respective chamber of the apparatus, a vibrational removal of build material depositions from a respective chamber of the apparatus is possible. Thus, the cleaning device may comprise a vibrational build material removing unit adapted to vibrationally remove deposited build material from portions of the chamber, e.g. surfaces of chamber wall portions, at which build material is deposited during operation of the apparatus. The vibrational build material removing unit may be built as a vibrational unit, e.g. an ultrasonic generating and transmitting unit, adapted to generate and transmit (mechanical) vibrations or may comprise at least one vibrational unit.

Alternatively or additionally to a respective pneumatic, mechanical or vibrational removal of build material depositions from a respective chamber of the apparatus, a magnetic removal of (magnetizable or magnetic) build material depositions from a respective chamber of the apparatus is possible. Thus, the cleaning device may comprise a magnetic build material removing unit adapted to magnetically remove deposited (magnetizable or magnetic) build material from portions of the chamber, e.g. surfaces of chamber wall portions, at which build material is deposited during operation of the apparatus. The magnetic build material removing unit may generate a magnetic interaction with the build material depositions to be removed, in particular a magnetic attractive force on the build material depositions to be removed, for removing the build material depositions. The magnetic build material removing unit may be built as a permanent-magnet or an electric magnet or may comprise at least one permanent-magnet or at least one electric magnet.

The invention also relates to a cleaning device for an apparatus for additively manufacturing three-dimensional objects by means of successive layerwise selective irradiation and consolidation of layers of build material which can be consolidated by means of an energy beam. The cleaning device is adapted to remove undesired build material depositions from at least one chamber of a respective apparatus. The cleaning device comprises at least one cleaning element being connectable with a carrying element of a carrying device of a respective apparatus, the carrying element being moveably supported in at least one degree of freedom of motion within the at least one chamber. All annotations concerning the apparatus apply to the cleaning device in analogous manner.

The invention further relates to a method for cleaning of at least one chamber of an apparatus for additively manufacturing of three-dimensional objects by means of successive layerwise selective irradiation and consolidation of layers of build material which can be consolidated by means of an energy beam, in which chamber undesired build material depositions are built during operation of the apparatus. Thereby, at least one cleaning device as specified above is used for cleaning of the at least one chamber. When implementing the method, at least one cleaning element is at least partly moved through the at least one chamber, thereby removing undesired build material depositions from the at least one chamber. All annotations concerning the apparatus apply to the method in analogous manner.

Exemplary embodiments of the invention are described with reference to the Fig., whereby:
- Fig. 1: shows a principle drawing of an apparatus for additively manufacturing three-dimensional objects according to an exemplary embodiment;
- Fig. 2: shows a top-view of the process chamber of the apparatus of Fig. 1; and
- Fig. 3 - 7: each show a principle drawing of cleaning device according to an exemplary embodiment.

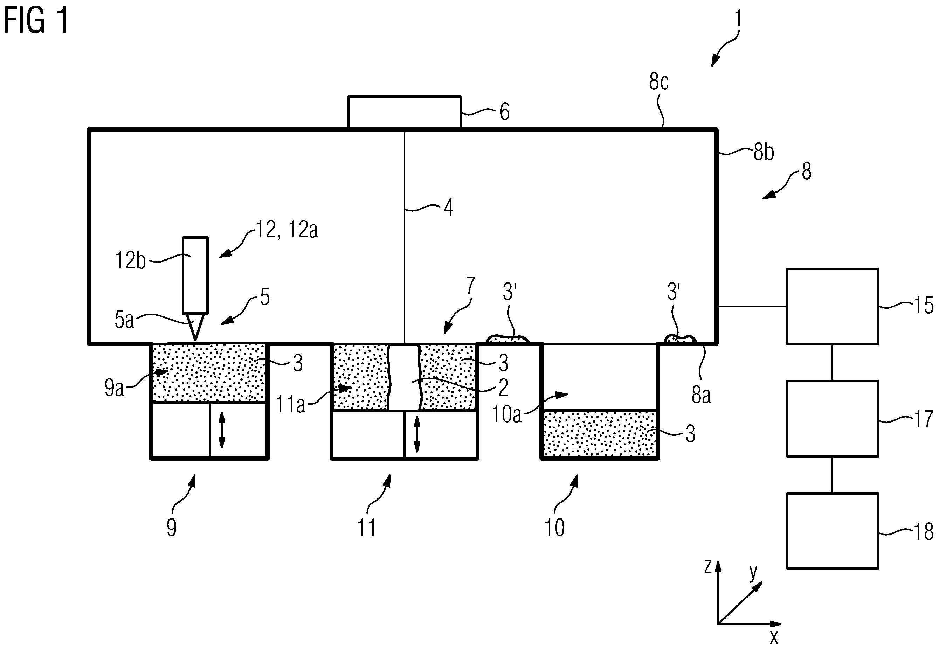

Fig. 1 shows a principle drawing of an apparatus 1 for additively manufacturing three-dimensional objects 2, e.g. technical components, by means of successive layerwise selective irradiation and accompanying consolidation of layers of a powdered build material 3, e.g. a metal powder, which can be consolidated by means of at least one energy beam 4 according to an exemplary embodiment. The apparatus 1 can be a selective laser melting apparatus, for instance.

The apparatus 1 comprises a number of functional devices which are operable during its operation. Each functional device may comprise a number of functional units. Operation of the functional devices and the apparatus, respective is controlled by a control device (not depicted). Exemplary functional devices of the apparatus 1 are a build material application device 5, e.g. a coating device having a coating blade 5a, an irradiation device 6, and a carrying device 12. The build material application device 5 is configured to apply layers 2 of build material 3 in the build plane 7 of the apparatus 1, the layers 2 being selectively irradiated and consolidated during the additive build-up of the object 2. The irradiation device 6 is configured to selectively irradiate and consolidate portions of layers of build material 3 with at least one energy beam 4 during the additive build-up of the object 2. The carrying device 12 is adapted to carry at least one functional device or at least one functional unit, e.g. the coating blade 5a, of a respective functional device, e.g. build material application device 5, and therefore, comprises a carrying unit 12a.

According to the exemplary embodiment of Fig. 1, the apparatus 1 is provided with a dose device 9, particularly a dose module having a dose chamber 9a, which is adapted to provide a specific amount of build material 3 which is to be applied in the build plane 7 of the apparatus 1 by means of the build material application device 5 and an overflow device 10, particularly an overflow module having an overflow chamber 10a, which is to be adapted to receive loose non-consolidated build material 3. As is discernible from Fig. 1, a build device 11, particularly a build module having a build chamber 11a, is disposed between the dose device 9 and the overflow device 10.

Some of the functional devices of the apparatus 1, e.g. the build material application device 5 and the carrying device 12, are disposed within a chamber 8 of the apparatus. In the exemplary embodiment of Fig. 1, the chamber 8 is the process chamber in which the additive build-up of three-dimensional objects take place during operation of the apparatus 1.

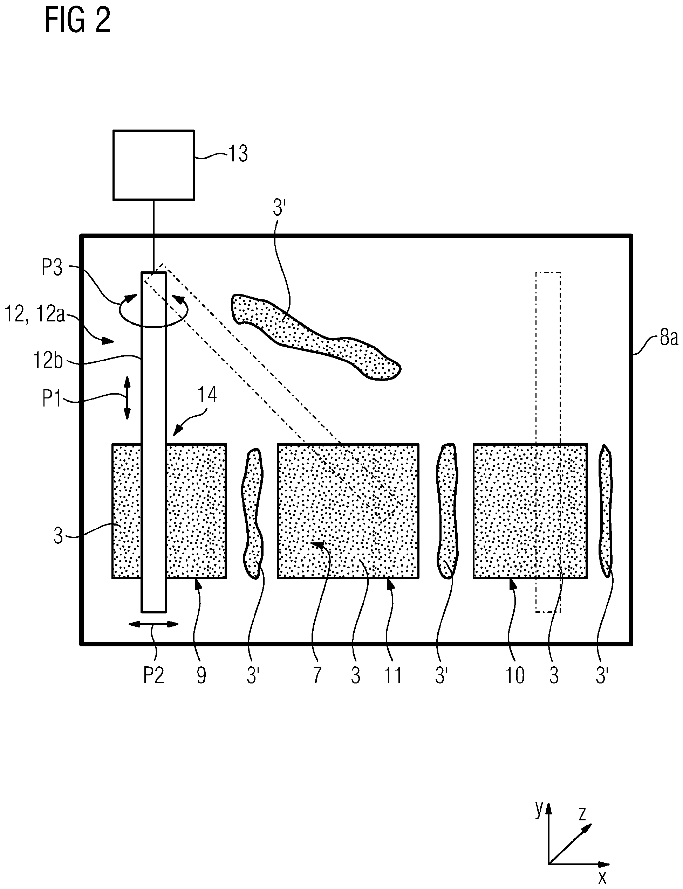

As is discernible from Fig. 1, the chamber 8 comprises a number of walls, e.g. a bottom wall 8a, side walls 8b, and a top wall 8c defining an inner chamber volume. During operation of the apparatus 1, undesired build material depositions 3' are built during operation of the apparatus 1; in the exemplary embodiment according to Fig. 1, 2, respective build material depositions 3' are exemplarily shown at the bottom wall 8a.

The carrying unit 12a comprises a carrying element 12b. The carrying element 12b comprises a base body. As is discernible from Fig. 2, the base body has a longitudinal geometric design and may therefore, be deemed as a carrying arm. The base body is provided with a number of carrying interfaces 12c adapted to interchangeably carry an item, in particular a functional device or functional unit of the apparatus 1. The carrying interfaces 12c allow for a detachable, e.g. mechanical, connection of the carrying element 12b with an item, in particular at least one functional device or functional unit of the apparatus 1.

The carrying element 12b is moveably supported in at least one degree of freedom of motion within the chamber 8. A respective freedom of motion may comprise translational motion of the carrying element 12b as indicated by arrows P1, P2 along at least one translational axis, e.g. the x- and/or y- and/or z-axis of the apparatus 1, and/or rotational motions of the carrying element 12b as indicated by arrow P3 along at least one rotational axis. It is also possible that the carrying element 12b is moveably supported not only within one chamber 8, but also within a plurality of chambers 8. A drive unit 13, e.g. a motor, being adapted to generate a drive force setting the carrying element 12b in a respective motion may be associated with the carrying element 12 and the carrying unit 12a, respectively. The implementation of tracks of motion of the carrying element 12b may be controlled by a hard- and/or software embodied control unit (not shown) associated with the carrying element 12b or the carrying unit 12a, respectively.

The apparatus 1 further comprises a cleaning device 14 assigned to the chamber 8 in which undesired build material depositions 3' are built during operation of the apparatus 1. The cleaning device 14 is adapted to remove respective undesired build material depositions 3' from the chamber. The cleaning device comprises at least one cleaning element 14a being connectable or connected with the carrying element 12b. Hence, when connected with the carrying element 12b, the cleaning element 14a may be moved in at least one degree of freedom of motion within the chamber 8. The track of motion along which the cleaning element 12b and the cleaning element 14a connected therewith is moved in order to remove undesired build material depositions 3' from the chamber 8 may include all portions of the chamber 8 in which undesired build material depositions 3' are built during operation of the apparatus 1. As an example, the cleaning device 14 may be moved along bottom wall portions of the chamber 8 at which build material depositions 3' are be built during operation of the apparatus 1.

The track of motion along which the carrying element 12b is moved in order to remove undesired build material depositions 3' from the chamber 8 may differ from the track of motion along which the carrying element 12b is moved in order to e.g. apply layers of build material 3. Hence, the carrying element 12b may be moved in different tracks of motion in different operational modes, whereby one operational mode is a cleaning mode in which undesired build material depositions 3' are removed from the chamber 8. The implementation of different tracks of motion and operational modes, respectively of the carrying element 12b may be controlled by the aforementioned control unit.

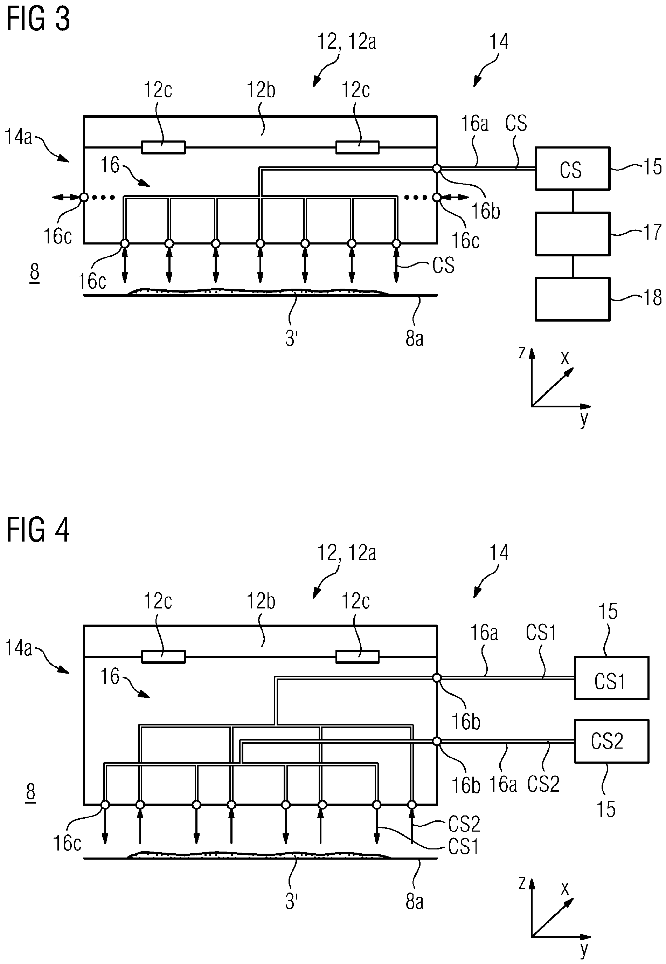

Fig. 3 shows an embodiment of the cleaning device 14 according to an exemplary embodiment. Fig. 3 is a front view of the carrying element 12 having a cleaning element 14a element connected therewith. The carrying interfaces 12c of the carrying element 12b allow for a detachable, e.g. mechanical, particularly bolted, connection of the carrying element 12b with the cleaning element 14a.

In the exemplary embodiment of Fig. 3, the cleaning device 14 comprises a stream generating unit 15. The stream generating unit 15 is adapted to generate at least one cleaning stream CS (as indicated by double-arrows) at least partly streaming through the chamber 8, i.e. particularly along portions of the chamber 8, e.g. surfaces of chamber wall portions, at which build material 3 is deposited during operation of the apparatus 1. While streaming through the chamber 8, the cleaning stream CS may remove build material depositions 3' from respective portions of the chamber 8 at which build material 4 is deposited. The cleaning stream CS is a fluid stream, particularly a gas stream. By properly adjusting the streaming properties, e.g. streaming direction, streaming velocity, streaming profile, i.e. adjusting turbulent or laminar streaming profiles, etc., even persistent build material depositions 3' may be removed. Hence, a pneumatic removal of build material depositions 3' from the chamber 8 is possible.

The double arrow indicated that the cleaning stream CS may be a blowing stream and/or a sucking stream.

In a first embodiment, the stream generating unit 15 may thus, be adapted to generate a blowing stream adapted to blow deposited build material 3 from respective portions of the chamber 8 at which build material 3 is deposited during operation of the apparatus 1. Thus, the removal of respective build material depositions 3' may be implemented by a blowing stream. In this case, the stream generating 15 unit may be built as or may comprise a pumping unit adapted to generate a respective blowing stream.

In a second embodiment, the stream generating unit 15 may thus, additionally or alternatively be adapted to generate a sucking stream adapted to suck deposited build material 3 from respective portions of the chamber 8 at which build material 3 is deposited during operation of the apparatus 1 and/or to suck swirled build material 3 from the chamber 8. Thus, the removal of respective build material depositions 3' may additionally or alternatively be implemented by a sucking stream. In this case, the stream generating 15 unit may be built as or may comprise a pumping unit adapted to generate a respective sucking stream.

In the first embodiment in which the stream generating unit 15 is adapted to generate a respective blowing stream, the blowing stream may be directed/urged towards an inlet of a build material reception chamber, particularly the overflow chamber 10a of the overflow module or overflow device 10, respectively. Hence, by using a blowing stream build material 3 may not only be removed from the location at which it was deposited, but (removed build material) may also be directed/urged towards an inlet of a respective build material reception chamber in which also non-consolidated build material 3 which was not deposited is received.

As is discernible from Fig. 3, the cleaning element 14a is provided with a streaming channel structure 16 comprising a streaming channel 16a extending between at least one streaming channel inlet 16b of the cleaning element 14a and a number of streaming channel outlets 16c of the cleaning element 14a. The streaming channel inlet 16b comprises a suitable streaming inlet interface (not explicitly shown), which may be built as or comprise a pneumatic connector element, allowing the cleaning stream CS to enter the streaming channel structure 16. The streaming channel inlet 16b may particularly allow for a pneumatic connection between the stream generating unit 15 and the streaming channel 16a and thus, for connecting the stream generating unit 15 with the streaming channel 16a so that the cleaning stream CS may be introduced into the streaming channel 16a. A streaming channel outlet 16c may comprise a suitable streaming outlet interface (not explicitly shown), which may be built as or comprise at least one, particularly bore- or slit-like, opening, allowing the cleaning stream CS to exit the streaming channel 16a. The geometric design of a respective opening may be chosen so as to influence the streaming properties of the cleaning stream CS exiting the streaming channel structure 16; as such, a respective opening may be built as or may comprise a nozzle. As is indicated in Fig. 2, respective streaming channel outlet 16c may be provided at any free edge of the cleaning element 14b.

The apparatus 1 may comprise a build material separating unit 17, which may be built as a filter unit and/or a cyclone unit or may comprise at least one filter unit and/or at least one cyclone unit, adapted to separate build material 3 from a cleaning stream CS, e.g. from a blowing stream or a sucking stream (see Fig. 1, 3). The build material separating unit 17 may communicate with the streaming channel structure (not explicitly shown) of the apparatus 1, e.g. may be disposed within a respective streaming channel structure of the apparatus 1, so that respective cleaning streams CS, e.g. blowing streams or sucking streams, respectively may stream through the build material separating unit 17, whereby build material 3 is separated from the respective cleaning stream CS. Build material 3 which was separated from a respective cleaning stream CA may at least partly be, if need be after being processed, e.g. sieved in a sieving device 18, re-used in an additive manufacturing process.

Fig. 4 shows an embodiment of the cleaning device 14 according to another exemplary embodiment. Fig. 4 is also a front view of the carrying element 12 having a cleaning element 14a element connected therewith. The carrying interfaces 12c of the carrying element 12b allow for a detachable, e.g. mechanical, particularly bolted, connection of the carrying element 12b with the cleaning element 14a.

Compared with the exemplary embodiment of Fig. 3, the streaming channel structure 16 comprises two streaming channels 16a. In the exemplary embodiment of Fig. 4, the streaming channels 16a do not communicate with each other, i.e. are not interconnected. Yet, in other exemplary embodiments, two streaming channels 16a which communicate with each other, i.e. are interconnected, are conceivable.

In the exemplary embodiment of Fig. 4, i.e. in the case of separate, not communicating streaming channels 16a, the streaming channel structure 16 comprises a first streaming channel 16a for a first cleaning stream CS1, e.g. a blowing stream adapted to blow deposited build material 3 from respective portions of the chamber 8 at which build material 3 is deposited during operation of the apparatus 1, and a second streaming channel 16a for a second cleaning stream CS2, e.g. a sucking stream adapted to suck deposited build material 3 from respective portions of the chamber 8 at which build material 3 is deposited during operation of the apparatus 1 and/or to suck swirled build material 1 from the chamber 8. As is discernible from Fig. 4, respective first and second cleaning streams CS1, CS2 may be generated by separate stream generating units 15, i.e. a first stream generating 15 may be provided to generate the first cleaning stream CS1, and a second stream generating unit 15 may be provided to generate the second cleaning stream CS2.

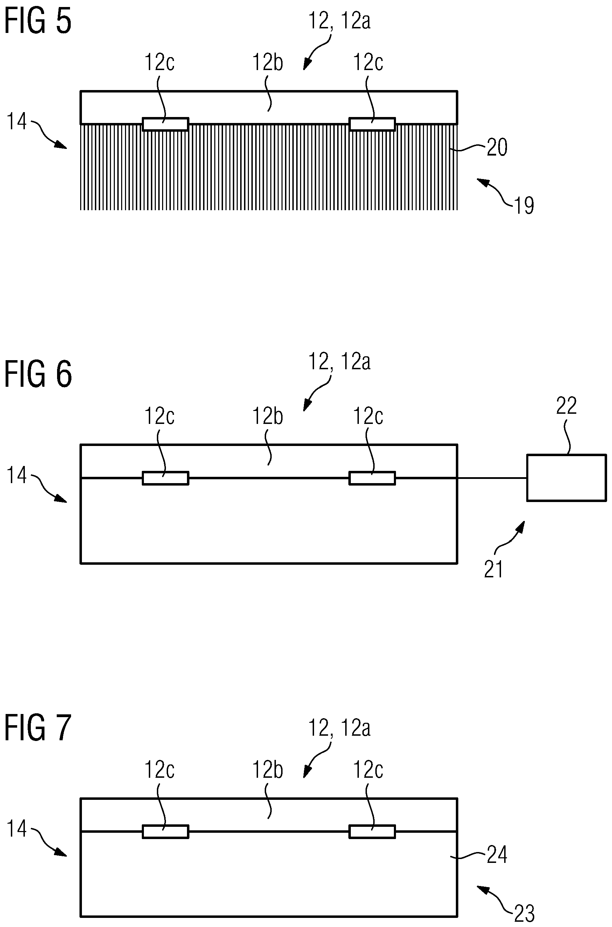

Fig. 5 shows an embodiment of the cleaning device 14 according to another exemplary embodiment. Fig. 5 is also a front view of the carrying element 12 having a cleaning element 14a element connected therewith. The carrying interfaces 12c of the carrying element 12b allow for a detachable, e.g. mechanical, particularly bolted, connection of the carrying element 12b with the cleaning element 14a.

According to the exemplary embodiment of Fig. 5, a mechanical removal of build material depositions 3' from chamber 8 is possible. Thus, the cleaning device 14 comprises a mechanical build material removing unit 19 adapted to mechanically remove deposited build material 3 from portions of the chamber 8, e.g. surfaces of chamber wall portions, at which build material 3 is deposited during operation of the apparatus 1. The mechanical build material removing unit 19 is built as a brush- or broom-unit 20 or may comprise at least one brush- and/or broom unit 20.

Fig. 6 shows an embodiment of the cleaning device 14 according to another exemplary embodiment. Fig. 6 is also a front view of the carrying element 12 having a cleaning element 14a element connected therewith. The carrying interfaces 12c of the carrying element 12b allow for a detachable, e.g. mechanical, particularly bolted, connection of the carrying element 12b with the cleaning element 14a.

According to the exemplary embodiment of Fig. 6, a vibrational removal of build material depositions 3' from chamber 8 is possible. Thus, the cleaning device 14 comprises a vibrational build material removing unit 21 adapted to vibrationally remove deposited build material 3 from portions of the chamber 8, e.g. surfaces of chamber wall portions, at which build material 3 is deposited during operation of the apparatus 1. The vibrational build material removing unit 21 is built as a vibrational unit 22, e.g. an ultrasonic generating and transmitting unit, adapted to generate and transmit (mechanical) vibrations or may comprise at least one vibrational unit. The cleaning element 14a may serve as a vibrational transducer.

Fig. 7 shows an embodiment of the cleaning device 14 according to another exemplary embodiment. Fig. 7 is also a front view of the carrying element 12 having a cleaning element 14a element connected therewith. The carrying interfaces 12c of the carrying element 12b allow for a detachable, e.g. mechanical, particularly bolted, connection of the carrying element 12b with the cleaning element 14a.

According to the exemplary embodiment of Fig. 6, a magnetic removal of (magnetizable or magnetic) build material depositions 3' from chamber 8 is possible. Thus, the cleaning device 14 may comprise a magnetic build material removing unit 23 adapted to magnetically remove deposited (magnetizable or magnetic) build material 3 from portions of the chamber 8, e.g. surfaces of chamber wall portions, at which build material 3 is deposited during operation of the apparatus 1. The magnetic build material removing unit 23 generates a magnetic interaction with the build material depositions 3' to be removed, in particular a magnetic attractive force on the build material depositions 3' to be removed, for removing the build material depositions 3'. The magnetic build material removing unit 23 is built as a permanent-magnet 24 or an electric magnet or may comprise at least one permanent-magnet or at least one electric magnet.

As is clear from the exemplary embodiments, the apparatus 1 allows for implementing a method for cleaning of at least one chamber 8 of an apparatus 1 for additively manufacturing of three-dimensional objects 2, in which chamber 8 undesired build material depositions 3' are built during operation of the apparatus 1. When implementing the method, at least one cleaning element 14a is at least partly moved through the chamber 8, thereby removing undesired build material depositions 3' from the chamber 8.

## Claims

1. Apparatus (1) for additively manufacturing of three-dimensional objects (2) by means of successive layerwise selective irradiation and consolidation of layers of build material (3) which can be consolidated by means of an energy beam (4), the apparatus (1) comprising:
- at least one chamber (8) in which build material depositions (3') are built during operation of the apparatus (1),
- at least one carrying device (12), the carrying device (12) comprising at least one carrying element (12b) being moveably supported in at least one degree of freedom of motion within the at least one chamber (8),
**characterized by**
a cleaning device (14) assignable or assigned to the at least one chamber (8), the cleaning device (14) being adapted to remove respective undesired build material depositions (3') from the at least one chamber (8), the cleaning device (14) comprising at least one cleaning element (14a) being connectable or connected with the carrying element (12b).

2. Apparatus according to Claim 1, **wherein** the cleaning device (14) comprises a stream generating (15) unit adapted to generate at least one cleaning stream (CS) at least partly streaming through the chamber (8), particularly along portions of the chamber (8), e.g. surfaces of chamber wall portions, at which build material (3) is deposited during operation of the apparatus (1).

3. Apparatus according to Claim 2, **wherein** the stream generating unit (15) is adapted to generate at least one blowing stream adapted to blow deposited build material (3) from respective portions of the chamber (8) at which build material (3) is deposited during operation of the apparatus (1).

4. Apparatus according to Claim 3, **wherein** the stream generating unit (15) is adapted to generate at least one blowing stream adapted to blow deposited build material (3) from respective portions of the chamber (8) at which build material (3) is deposited during operation of the apparatus (1), whereby the blowing stream is directed towards an inlet of a build material reception chamber, particularly a build material reception chamber or an overflow module, adapted to receive build material (3) which was not consolidated during operation of the apparatus (1).

5. Apparatus according to any of Claims 2 - 4, **wherein** the or a stream generating unit (15) is adapted to generate at least one sucking stream adapted to suck deposited build material (3) from respective portions of the chamber (8) at which build material (3) is deposited during operation of the apparatus (1) and/or to suck swirled build material (3) from the chamber (8).

6. Apparatus according to any of Claims 2 - 5, **wherein** the cleaning element (14a) is provided with a streaming channel structure (16) comprising at least one streaming channel (16a) extending between a streaming channel inlet (16b) and at least one streaming channel outlet (16c).

7. Apparatus according to Claim 6, **wherein** the streaming channel structure (16) comprises at least one streaming channel (16a) for a first cleaning stream (CS1) and at least one second streaming channel (16a) for a second cleaning stream (CS2).

8. Apparatus according to any of Claims 2 - 7, **comprising** at least one build material separating unit (17) adapted to separate build material (3) from a blowing stream adapted to blow deposited build material (3) from respective portions of the chamber (8) at which build material (3) is deposited during operation of the apparatus 81) and/or adapted to separate build material (3) from a sucking stream adapted to suck deposited build material (3) from respective portions of the chamber (8) at which build material (3) is deposited during operation of the apparatus (1) and/or to suck swirled build material (3) from the chamber (8).

9. Apparatus according to Claim 8, **wherein** the build material separating unit (17) is built as a filter unit and/or a cyclone unit or comprises at least one filter unit and/or at least one cyclone unit.

10. Apparatus according to any of the preceding Claims, **wherein** the cleaning device (14) comprises a mechanical build material removing unit (19) adapted to mechanically remove deposited build material (3) from portions of the chamber (8), e.g. surfaces of chamber wall portions, at which build material (3) is deposited during operation of the apparatus (1).

11. Apparatus according to any of the preceding Claims, **wherein** the cleaning device (14) may comprise a vibrational build material removing unit (21) adapted to vibrationally remove deposited build material (3) from portions of the chamber (8), e.g. surfaces of chamber wall portions, at which build material (3) is deposited during operation of the apparatus (1).

12. Apparatus according to any of the preceding Claims, **wherein** the cleaning device (14) comprises a magnetic build material removing unit (23) adapted to magnetically remove deposited magnetizable or magnetic build material (3) from portions of the chamber (8), e.g. surfaces of chamber wall portions, at which build material (3) is deposited during operation of the apparatus (1).

13. Cleaning device (14) for an apparatus (1) for additively manufacturing three-dimensional objects (2) by means of successive layerwise selective irradiation and consolidation of layers of build material (3) which can be consolidated by means of an energy beam (4),
the cleaning device (14) being adapted to remove undesired build material depositions (3') from at least one chamber (8) of a respective apparatus (1), the cleaning device (14) comprising at least one cleaning element (14a) being connectable with a carrying element (12b) of a carrying device (12) of a respective apparatus (1), the carrying element (12b) being moveably supported in at least one degree of freedom of motion within the at least one chamber (8).

14. Method for cleaning of at least one chamber (8) of an apparatus (1) for additively manufacturing of three-dimensional objects (2) by means of successive layerwise selective irradiation and consolidation of layers of build material (3) which can be consolidated by means of an energy beam (4), in which chamber (8) build material depositions (3') are built during operation of the apparatus (1), wherein at least one cleaning device (14) according to Claim 13 is used for cleaning of the at least one chamber (8).
